# EUROPÄISCHE PATENTSCHRIFT

(11) **EP 1 640 416 B1**
(45) Veröffentlichungstag und Bekanntmachung des Hinweises auf die Patenterteilung: **27.06.2007**
(21) Anmeldenummer: 05020006.2
(22) Anmeldetag: 14.09.2005
(51) Int. Cl.: C08L 83/04

(54) **Vernetzbare Massen auf der Basis von Organosiliciumverbindungen**
Crosslinkable masses on the basis of organosilicon compounds
Masses réticulables a base des composés d'organosilicium

(30) Priorität: 23.09.2004 DE 102004046179
(43) Veröffentlichungstag der Anmeldung: 29.03.2006
(73) Patentinhaber: Wacker Chemie AG, 81737 München (DE)
(72) Erfinder: Schöley, Peter, 01665 Diera-Zehren (DE); Söllradl, Herbert, Dr., 84547 Emmerting (DE)
(74) Vertreter: Budczinski, Angelika

(56) Entgegenhaltungen:
- US-A- 3 542 901
- US-A- 3 714 089
- US-A- 5 486 589

## Beschreibung

Die Erfindung betrifft vernetzbare Massen auf der Basis von Organosiliciumverbindungen mit regelbarem Modul, ein Verfahren zu deren Herstellung sowie deren Verwendung.

Vernetzbare Massen auf der Basis von Organosiliciumverbindungen sind bereits vielfach bekannt. Unter Ausschluss von Wasser lagerfähige, bei Zutritt von Wasser bei Raumtemperatur zu Elastomeren vulkanisierende Einkomponenten-Dichtmassen sind ebenfalls bekannt. Diese Produkte werden in großen Mengen zum Beispiel in der Bauindustrie eingesetzt. Die chemische Basis dieser Dichtmassen sind lineare Polymere, die durch Silylgruppen terminiert sind, die reaktive Substituenten wie OH-Gruppen oder hydrolysierbare Gruppen, wie zum Beispiel Acetoxygruppen, tragen. Des Weiteren enthalten diese Mischungen üblicherweise Füllstoffe, - nichtreaktive Weichmacher und gegebenenfalls Vernetzer, Katalysatoren und Additive. Für viele Anwendungen ist es erwünscht, dass der Modul der Dichtmasse, das ist der Spannungswert bei 100% Dehnung eines ausgehärteten Probekörpers, niedrig ist. Dadurch ist gewährleistet, dass bei Dehnung einer Fuge die Zugbeanspruchung an der Fugenflanke möglichst niedrig ist und ein Abriss der Dichtmasse vom Untergrund vermieden wird. Die speziell für niedermodulige Dichtstoffe erforderlichen großen Kettenlängen führen zu sehr hohen Viskositäten der Polymere, so dass die Dichtmassen im unvernetzten Zustand nur schwer handhabbar sind. So lassen sie sich nur schwer aus Gebinden auspressen oder weisen bei der Verarbeitung einen unerwünscht langen Fadenzug auf.

Des Weiteren ist seit langem bekannt, dass über die Menge an nichtreaktiven Weichmachern und aktiven Füllstoffen der Modul variiert werden kann. Hier sind aber Grenzen dadurch gesetzt, dass nicht beliebig variiert werden kann, da sonst die Massen zum Beispiel bei zuviel Weichmacher oder zuwenig aktivem Füllstoff zu niedrigviskos werden, worunter das Applikationsverhalten der pastösen Dichtmasse leidet. Darüber hinaus ist es bekannt hochviskose Polymere zu verwenden, die teilweise an einem Kettenende eine nichtreaktive Gruppe enthalten. Beispielsweise sind in US-A 6,235,832 Polymere beschrieben, die durch Umsetzung von vinylterminierten Polydimethylsiloxanen mit Si-H-haltigen Vernetzern erhalten werden. Es besteht jedoch dann die Gefahr, dass nichtreaktive, hochviskose Bestandteile aus der ausgehärteten Dichtmasse ausschwitzen, was zur Verschmutzung der Substrate führen kann. US-A 3,542,901 beschreibt die Verwendung eines vorzugsweise hochviskosen linearen Polysiloxans in einem Alkohol abspaltendem RTV1-System, das eine statistische Verteilung von reaktiven und nichtreaktiven Endgruppen aufweist, wobei insgesamt nur maximal 40 % nichtreaktive Kettenenden vorhanden sein dürfen. Dies führt aber zu Produkten mit unerwünscht hohen Vulkanisathärten.

Gegenstand der Erfindung sind vernetzbare Massen auf der Basis von Organosiliciumverbindungen herstellbar unter Verwendung von Organosiliciumverbindungen aus Einheiten der Formel

(HO)ₐR_{b}SiO_{(4-a-b)/2} (I),

wobei
R gleich oder verschieden sein kann und einen einwertigen, gegebenenfalls substituierten Kohlenwasserstoffrest bedeutet, der durch Heteroatome unterbrochen sein kann,
a 0 oder 1 ist und
b 0, 1, 2 oder 3 ist,
mit der Maßgabe, dass die Organosiliciumverbindung eine Einheit der Formel (I) mit a=1 aufweist und bei 25°C eine Viskosität von 5 bis 1000 mPas hat.

Vorzugsweise handelt es sich bei den erfindungsgemäß eingesetzten Organosiliciumverbindungen aus Einheiten der Formel (I) um im wesentlichen lineare Diorganosiloxane mit einem, bevorzugt endständigen, Hydroxylrest, besonders bevorzugt um Diorganopolysiloxane der Formel

OH(R₂SiO)ₙSiR₃ (II),

wobei R die oben genannte Bedeutung hat und der durchschnittliche Wert für n so gewählt ist, dass die Verbindung der Formel (II) eine Viskosität von 5 bis 1000 mPas besitzt, gemessen bei 25°C.

Obwohl in Formel (II) nicht angegeben bzw. aus der Bezeichnung Diorganopolysiloxan nicht entnehmbar, können herstellungsbedingt bis zu 10 Molprozent, bevorzugt bis zu 1 Molprozent, der Diorganosiloxaneinheiten durch andere Siloxaneinheiten, wie R₃SiO_{1/2}-, RSiO_{3/2}- und SiO_{4/2}-Einheiten, ersetzt sein, wobei R die vorstehend dafür angegebene Bedeutung hat, was aber nicht bevorzugt ist.

Im Rahmen der vorliegenden Erfindung sollen von dem Begriff Organopolysiloxane sowohl polymere, oligomere wie auch dimere Siloxane mitumfasst werden.

Bevorzugt handelt es sich bei Rest R um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen-und/oder Oxypropyleneinheiten aufgebaut sind, besonders bevorzugt um Kohlenwasserstoffreste mit 1 bis 12 Kohlenstoffatomen, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-Naphthyl-, Anthryl- und Phenanthrylrest; Alkarylreste, wie o-, m-, p-Tolylreste; Xylylreste und Ethylphenylreste; und Aralkylreste, wie der Benzylrest, der der α- und der β-Phenylethylrest.

Beispiele für substituierte Reste R sind 3-Aminopropyl-, 3-(2-Aminoethyl)aminopropyl-, 3-Cyclohexylaminopropyl-, N-Cyclohexylaminomethyl-, 3-Glycidoxypropyl- und 3-Methacryloxypropylrest.

Beispiele für Organosiliciumverbindungen aus Einheiten der Formel (I) sind (Me₃SiO)₃Si-OH, HO(SiMe₂O)₆₅SiMe₃, HO(SiViMeO)₉₀SiMe₃ und HO(SiMe₂0)₄₀SiViMe₂, wobei Me gleich Methylrest und Vi gleich Vinylrest ist.

Insbesondere handelt es sich bei den erfindungsgemäß eingesetzten Organosiliciumverbindungen aus Einheiten der Formel (I) um α-Hydroxy,ω-trialkylsilylpolydialkylsiloxane mit einer Viskosität bei 25°C von 5 bis 1000 mPas, ganz besonders bevorzugt um α-Hydroxy,ω-trimethylsilylpolydimethylsiloxane mit einer Viskosität bei 25°C von 5 bis 1000 mPas.

Die erfindungsgemäß eingesetzten Organosiliciumverbindungen aus Einheiten der Formel (I) haben eine Viskosität bei 25°C von bevorzugt 10 bis 500 mm²/s, besonders bevorzugt von 20 bis 200 mm²/s.

Die erfindungsgemäß eingesetzten Organosiliciumverbindungen aus Einheiten der Formel (I) können nach in der Chemie gängigen Methoden hergestellt werden, wie z.B. durch Umsetzung von Trimethylsilanol mit Hexamethylcyclotrisiloxan in Anwesenheit von Kaliumfluorid.

Die erfindungsgemäßen Massen enthalten Organosiliciumverbindungen aus Einheiten der Formel (I) in Mengen von bevorzugt 0,1 bis 15 Gewichtsteilen, besonders bevorzugt 0,1 bis 10 Gewichtsteilen, insbesondere 0,5 bis 5 Gewichtsteilen, jeweils bezogen auf 100 Gewichtsteile vernetzbarer Masse.

Bei den erfindungsgemäßen Massen kann es sich um beliebige, bisher bekannte Typen von zu Elastomeren vernetzbaren Massen auf der Basis von Organosiliciumverbindungen handeln, wie beispielsweise einkomponentige oder zweikomponentige bei Raumtemperatur vulkanisierbare Organopolysiloxanmassen (sog. RTV-Massen). Die vernetzbaren Massen können dabei frei von Füllstoffen sein, können aber auch aktive oder nicht aktive Füllstoffe enthalten.

Art und Menge der üblicherweise in solchen Massen verwendeten Komponenten sind bereits bekannt.

Die erfindungsgemäß eingesetzten Organosiliciumverbindungen aus Einheiten der Formel (I) können dabei beliebig mit den anderen Komponenten der erfindungsgemäßen vernetzbaren Massen vermischt werden. So können sie als letzter Schritt in die ansonsten fertige Siliconkautschukformulierung eingemischt oder während der Herstellung der Siliconkautschukmischung eingearbeitet werden. Die Organosiliciumverbindungen aus Einheiten der Formel (I) können aber auch in eines bzw. mehrere der eingesetzten Komponenten vorgemischt werden.

Der Mischprozess zur Herstellung der erfindungsgemäßen Massen ist bevorzugt ein einfaches mechanisches Vermengen. Je nach Konsistenz und Viskosität des Basismediums kann der Mischprozess in Knetern, Dissolvern, Z-Mischern oder einfachen Rührwerken erfolgen. Der Mischprozess wird vorzugsweise bei reduziertem Umgebungsdruck durchgeführt. Jedoch ist auch ein Mischen bei normalem oder erhöhtem Druck möglich. Ebenso der Einfachheit halber wird der Mischprozess bevorzugt bei Umgebungstemperatur durchgeführt. Es ist jedoch auch möglich, bei erhöhter Temperatur oder unter Kühlen zu mischen.

Bevorzugt handelt es sich bei den erfindungsgemäßen Massen um durch Kondensationsreaktion vernetzbare Massen.

Bevorzugt handelt es sich bei den erfindungsgemäßen durch Kondensation vernetzbaren Massen um solche, die herstellbar sind unter Verwendung von
(A) Organsiliciumverbindungen mit mindestens zwei Hydroxylgruppen oder mindestens zwei hydrolysierbaren Resten,
(B) Organosiliciumverbindungen aus Einheiten der Formel (I) und gegebenenfalls
(C) Vernetzer.

Bei den erfindungsgemäß eingesetzten Organosiliciumverbindungen (A) handelt es sich vorzugsweise um solche der allgemeinen Formel
Y_{3-c}R¹_{c}SiO-[R¹₂SiO]_{d}-SiR¹_{c}Y_{3-c} (III),
wobei
c 0, 1 oder 2 ist,
R¹ gleich oder verschieden sein kann und eine für R angegebene Bedeutung hat,
Y gleich oder verschieden sein kann und Hydroxylgruppe oder hydrolysierbarer Rest bedeutet und
d eine ganze Zahl von 200 bis 10 000, bevorzugt 300 bis 3 000, besonders bevorzugt 400 bis 2 000, ist.

Beispiele für Reste R¹ sind die für Rest R oben angegebenen Beispiele.

Bevorzugt handelt es sich bei Rest R¹ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen-und/oder Oxypropyleneinheiten aufgebaut sind, besonders bevorzugt um Kohlenwasserstoffreste mit 1 bis 12 Kohlenstoffatomen, insbesondere um den Methylrest.

Beispiele für Rest Y sind Hydroxylreste sowie alle bisher bekannten hydrolysierbaren Reste wie Acetoxyreste, Oximatoreste und Organyloxygruppen, wie etwa Alkoxyreste, wie Ethoxyreste, Alkoxyethoxyreste und Methoxyreste.

Bevorzugt handelt es sich bei Rest Y um Acetoxyreste und Hydroxylreste, besonders bevorzugt um Hydroxylreste.

Der durchschnittliche Wert für die Zahl d in Formel (III) ist vorzugsweise so gewählt, dass das Organopolysiloxan der Formel (III) eine Viskosität von 1000 bis 2 500 000 mPa·s, besonders bevorzugt von 4000 bis 800 000 mPa·s, jeweils gemessen bei einer Temperatur von 25°C, besitzt.

Obwohl in Formel (III) nicht angegeben, können bis zu 10 Molprozent der Diorganosiloxaneinheiten durch andere Siloxaneinheiten, wie R¹₃SiO_{1/2}-, R¹SiO_{3/2}- und SiO_{4/2}-Einheiten, ersetzt sein, wobei R¹ die vorstehend dafür angegebene Bedeutung hat.

Beispiele für die in den erfindungsgemäßen Massen eingesetzten Organopolysiloxane (A) sind (MeCOO)₂MeSiO[SiMe₂O]₂₀₀₋₂₀₀₀SiMe(OOCMe)₂, (OH)Me₂SiO [SiMe₂O]₂₀₀₋₂₀₀₀SiMe₂(OH), (MeCOO)₂EtSiO[SiMe₂O]₂₀₀₋₂₀₀₀SiEt(OOCMe)₂ und (MeCOO)₂ViSiO[SiMe₂O]₂₀₀₋₂₀₀₀SiVi(OOCMe)₂, wobei Me Methylrest, Et Ethylrest und Vi Vinylrest bedeutet.

Die in den erfindungsgemäßen Massen eingesetzten Organosiliciumverbindungen (A) sind handelsübliche Produkte bzw. können nach in der Siliciumchemie bekannten Verfahren, beispielsweise durch Umsetzung von α,ω-Dihydroxypolyorganosiloxanen mit den entsprechenden Organyloxysilanen, hergestellt werden.

Bei den in den erfindungsgemäßen Massen gegebenenfalls eingesetzten Vernetzern (C) können alle Vernetzer eingesetzt werden, die auch bisher in durch Kondensation vernetzbaren Massen eingesetzt worden sind, wie etwa Vernetzer mit mindestens drei hydrolysierbaren Resten, ausgewählt aus Acetoxy-, Oximato- und Organyloxygruppen.

Beispiele für Vernetzer (C) sind Organyloxysilane, Oximosilane und Acetoxysilane sowie deren Teilhydrolysate, wie beispielsweise Methyltriacetoxysilan, Ethyltriacetoxysilan, Propyltriacetoxysilan, Vinyltriacetoxysilan, Tetraethoxysilan, Tetra-isopropoxysilan, Tetra-n-propoxysilan, Methyltrimethoxysilan, Methyltriethoxysilan, Vinyltrimethoxysilan und Vinyltriethoxysilan sowie deren Teilhydrolysate.

Bei den Teilhydrolysaten kann es sich dabei um Teilhomohydrolysate handeln, d.h. Teilhydrolysate von einer Art von Organosiliciumverbindung, wie auch um Teilcohydrolysate, d.h. Teilhydrolysate von mindestens zwei verschiedenen Arten von Organosiliciumverbindungen.

Handelt es sich bei den in den erfindungsgemäßen Massen gegebenenfalls eingesetzten Vernetzern (C) um Teilhydrolysate von Organosiliciumverbindungen, so sind solche mit bis zu 6 Siliciumatomen bevorzugt.

Bevorzugt wird als Vernetzer (C) Methyltriacetoxysilan, Ethyltriacetoxysilan, Propyltriacetoxysilan und Vinyltriacetoxysilan und/oder deren Teilhydrolysate eingesetzt.

Falls in den erfindungsgemäßen Massen Vernetzer (C) eingesetzt werden, handelt es sich um Mengen von vorzugsweise 0,05 bis 10 Gewichtsteilen, bevorzugt 0,2 bis 5 Gewichtteilen, jeweils bezogen auf 100 Gewichtsteile Bestandteil (A).

Die in den erfindungsgemäßen Massen gegebenenfalls eingesetzten Vernetzer (C) sind handelsübliche Produkte bzw. können nach in der Siliciumchemie bekannten Verfahren hergestellt werden.

Zusätzlich zu den oben beschriebenen Komponenten (A), (B) und gegebenenfalls (C) können die erfindungsgemäßen Massen nun alle weiteren Stoffe enthalten, die auch bisher in durch Kondensationsreaktion vernetzbaren Massen eingesetzt worden sind, wie z.B. Katalysatoren (D), Weichmacher (E), Füllstoffe (F), Haftvermittler (G) und Additive (H).

Beispiele für gegebenenfalls eingesetzte Katalysatoren (D) sind die bisher schon bekannten Titanverbindungen und organische Zinnverbindungen, wie Di-n-butylzinndilaurat und Di-n-butylzinndiacetat, Di-n-butylzinnoxid, Dioctylzinndiacetat, Dioctylzinndilaurat, Dioctylzinnoxid sowie Umsetzungsprodukte dieser Verbindungen mit Alkoxysilanen wie Tetraethoxysilan, wobei Di- , n-butylzinndiacetat und Dibutylzinnoxid in Tetraethylsilikat-Hydrolysat bevorzugt sind und Di-n-butylzinnoxid in Tetraethylsilikat-Hydrolysat besonders bevorzugt ist.

Falls die erfindungsgemäßen Massen Katalysator (D) enthalten, handelt es sich um Mengen von vorzugsweise 0,01 bis 3 Gewichtsteilen, bevorzugt 0,05 bis 2 Gewichtteilen, jeweils bezogen auf 100 Gewichtsteile Bestandteil (A).

Beispiele für gegebenenfalls eingesetzte Weichmacher (E) sind bei Raumtemperatur flüssige, durch Trimethylsiloxygruppen endblockierte Dimethylpolysiloxane, insbesondere mit Viskositäten bei 25°C im Bereich zwischen 50 und 1000 mPas, sowie hochsiedende Kohlenwasserstoffe, wie zum Beispiel Paraffinöle oder Mineralöle bestehend aus naphthenischen und paraffinischen Einheiten.

Die erfindungsgemäßen Massen enthalten Weichmacher (E) in Mengen von vorzugsweise 0 bis 300 Gewichtsteilen, besonders bevorzugt 10 bis 200 Gewichtsteilen, insbesondere 20 bis 100 Gewichtsteilen, jeweils bezogen auf 100 Gewichtsteile Organopolysiloxan (A).

Beispiele für gegebenenfalls eingesetzte Füllstoffe (F) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisen- oder Zinkoxide bzw. deren Mischoxide, Bariumsulfat, Calciumcarbonat, Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (F) eingesetzt werden, handelt es sich bevorzugt um hydrophile pyrogene Kieselsäure und gefälltes oder gemahlenes Calciumcarbonat.

Die erfindungsgemäßen Massen enthalten Füllstoffe (F) in Mengen von vorzugsweise 0 bis 300 Gewichtsteilen, besonders bevorzugt 1 bis 200 Gewichtsteilen, insbesondere 5 bis 200 Gewichtsteilen, jeweils bezogen auf 100 Gewichtsteile Organopolysiloxan (A).

Beispiele für die in den erfindungsgemäßen Massen eingesetzten Haftvermittler (G) sind Silane und Organopolysiloxane mit funktionellen Gruppen, wie beispielsweise solche mit Glycidoxypropyl-, Aminopropyl- oder Methacryloxypropylresten sowie Tetraalkoxysilane. Falls jedoch bereits eine andere Komponente, wie etwa Siloxan (A) oder Vernetzer (C), die genannten funktionellen Gruppen aufweist, kann auf einen Zusatz von Haftvermittler verzichtet werden.

Die erfindungsgemäßen Massen enthalten Haftvermittler (G) in Mengen von vorzugsweise 0 bis 50 Gewichtsteilen, besonders bevorzugt 1 bis 20 Gewichtsteilen, insbesondere 1 bis 10 Gewichtsteilen, jeweils bezogen auf 100 Gewichtsteile Organopolysiloxan (A).

Beispiele für Additive (H) sind Pigmente, Farbstoffe, Riechstoffe, Oxidationsinhibitoren, Mittel zur Beeinflussung der elektrischen Eigenschaften, wie leitfähiger Ruß, flammabweisend machende Mittel, Lichtschutzmittel und Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren und Thixotropiermittel, wie beispielsweise Phosphorsäureester, und organische Lösungsmittel.

Die erfindungsgemäßen Massen enthalten Additive (H) in Mengen von vorzugsweise 0 bis 100 Gewichtsteilen, besonders bevorzugt 0 bis 30 Gewichtsteilen, insbesondere 0 bis 10 Gewichtsteilen, jeweils bezogen auf 100 Gewichtsteile Organopolysiloxan (A).

Besonders bevorzugt handelt es sich bei den erfindungsgemäßen Massen um solche, die herstellbar sind unter Verwendung von
(A) Organosiliciumverbindungen der Formel (III),
(B) Organosiliciumverbindungen aus Einheiten der Formel (I)
   gegebenenfalls
(C) Vernetzer,
   gegebenenfalls
(D) Katalysator,
   gegebenenfalls
(E) Weichmacher,
   gegebenenfalls
(F) Füllstoffe,
   gegebenenfalls
(G) Haftvermittler und
   gegebenenfalls
(H) Additive
   bestehen.

Insbesondere werden zur Herstellung der erfindungsgemäßen Massen keine über die Komponenten (A), (B), (C), (D), (E), (F), (G) und (H) hinausgehenden Komponenten verwendet.

Zur Bereitung der erfindungsgemäßen Massen können alle Beständteile in beliebiger Reihenfolge miteinander vermischt werden, wie z.B. Komponenten (A) und (B) gegebenenfalls mit Komponenten (C), (D), (E) und (F). Es kann aber auch beispielsweise Komponente (B) mit (C) vorgemischt werden, und diese Vormischung kann dann mit den übrigen Komponenten weitervermischt werden. Dabei kann es zu sog. Endcapping-Reaktionen kommen, sofern Si-OH-Gruppen vorhanden sind. Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren oder niedrigeren Temperaturen erfolgen, z.B. bei Temperaturen im Bereich von 35°C bis 135°C oder bei 0 bis 20°C, bzw. bei höheren oder niedrigeren Drücken. Es können dabei auch eine oder mehrere der eingesetzten Komponenten in situ hergestellt werden.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Die erfindungsgemäßen Massen sind bei Raumtemperatur und dem Druck der umgebenden Atmosphäre bevorzugt fließfähig oder standfest pastös.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnliche Leerräume von z.B. 10 bis 40 mm lichter Weite, z.B. von Gebäuden, Land-, Wasser-und Luftfahrzeugen, oder als Klebstoffe oder Verkittungsmassen, z.B. im Fensterbau sowie z.B. zur Herstellung von Schutzüberzügen, einschließlich solcher für der ständigen Einwirkung von Süß- oder Meerwasser ausgesetzten Oberflächen, oder das Gleiten verhindernden Überzügen oder von gummielastischen Formkörpern sowie für die Isolierung von elektrischen oder elektronischen Vorrichtungen.

Die erfindungsgemäßen Massen haben den Vorteil, dass sie auf einfache Art und Weise herzustellen sind und von leicht zugänglichen Einsatzstoffen ausgegangen werden kann.

Die erfindungsgemäßen Massen haben den Vorteil, dass sie gut verarbeitbar sind.

Des Weiteren haben die erfindungsgemäßen vernetzbaren Massen den Vorteil, dass sie sich durch eine sehr hohe Lagerstabilität und eine hohe Vernetzungsgeschwindigkeit auszeichnen.

Insbesondere haben die erfindungsgemäßen vernetzbaren Massen den Vorteil, dass Dichtmassen mit regelbarem Modul bereitgestellt werden können, wobei der Modul über den Zusatz der Organosiliciumverbindungen aus Einheiten der Formel (I) leicht und in weiten Grenzen einstellbar ist.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Das in den Beispielen verwendete α-Hydroxy,ω-trimethylsilylpolydimethylsiloxan wurde entsprechend US-A 5,223,595 durch Umsetzung von Trimethylsilanol mit Hexamethylcyclotrisiloxan und Kaliumfluorid als Katalysator hergestellt.

### Beispiel 1

1400 g eines α,ω-Dihydroxypolydimethylsiloxans mit einer Viskosität von 80 000 mPa.s, 707 g eines trimethylsilylendblockierten Polydimethylsiloxans mit einer Viskosität von 100 mPa.s, 17 g eines α-Hydroxy,ω-trimethylsilyl-polydimethylsiloxans von 100 mPa.s wurden in einem Planetenmischer mit 76 g Ethyltriacetoxysilan und 33 g Methyltriacetoxysilan 5 Minuten vermischt. Anschließend wurden 182 g pyrogene Kieselsäure mit einer spezifischen Oberfläche von 150 m²/g (käuflich erhältlich unter der Marke HDK® V15 bei der Wacker-Chemie GmbH, D-München) eingearbeitet. Nach 20-minütigem Homogenisieren im Vakuum wurden 0,24 g Dibutylzinndiacetat unter Vakuum eingemischt. Das hergestellte Produkt wurde in feuchtigkeitsdichte, handelsübliche PE-Kartuschen abgefüllt.

Nach einer Lagerzeit von 24 Stunden wurde die Auspressrate bei einem Druck von 6,1 bar und einer Düsenöffnung von 2 mm ermittelt.

Zur Ermittlung der Shore-A-Härte wurde nach ISO 868 die abgefüllte Masse nach einer Lagerzeit von 24 Stunden zu 6 mm Platten vernetzen gelassen.

Zur Ermittlung der Reißdehnung und des Moduls (Spannung bei 100% Dehnung) wurde die abgefüllte Masse ebenfalls nach einer Lagerzeit von 24 Stunden zu H-Prüfkörpern nach ISO 8339 vernetzen gelassen (Aushärtung: 4 Wochen bei 21°C und 50 % Luftfeuchtigkeit).

Die Ergebnisse finden sich in Tabelle 1.

### Beispiel 2

Die in Beispiel 1 beschriebene Verfahrensweise wurde wiederholt mit dem Unterschied, dass anstelle von 17 g α-Hydroxy,ω-trimethylsilyl-polydimethylsiloxans und 706 g eines trimethylsilylendblockierten Polydimethylsiloxans nun 28 g α-Hydroxy,ω-trimethylsilyl-polydimethylsiloxan und 696 g eines trimethylsilylendblockierten Polydimethylsiloxans verwendet wurden.

Die Ergebnisse finden sich in Tabelle 1.

### Beispiel 3

Die in Beispiel 1 beschriebene Verfahrensweise wurde wiederholt mit dem Unterschied, dass anstelle von 17 g α-Hydroxy,ω―trimethylsilyl-polydimethylsiloxan und 706 g eines trimethylsilylendblockierten Polydimethylsiloxans nun 39 g α-Hydroxy,ω-trimethylsilyl-polydimethylsiloxan und 685 g eines trimethylsilylendblockierten Polydimethylsiloxans verwendet wurden.

Die Ergebnisse finden sich in Tabelle 1.

### Beispiel 4

Die in Beispiel 1 beschriebene Verfahrensweise wurde wiederholt mit dem Unterschied, dass anstelle von 17 g α-Hydroxy,ω-trimethylsilyl-polydimethylsiloxan und 706 g eines trimethylsilylendblockierten Polydimethylsiloxans nun 51 g α-Hydroxy,ω-trimethylsilyl-polydimethylsiloxan und 673 g eines trimethylsilylendblockierten Polydimethylsiloxans verwendet wurden.

Die Ergebnisse finden sich in Tabelle 1.

### Beispiel 5

Die in Beispiel 1 beschriebene Verfahrensweise wurde wiederholt mit dem Unterschied, dass anstelle von 17 g (α-Hydroxy,ω-trimethylsilyl-polydimethylsiloxan und 706 g eines trimethylsilylendblockierten Polydimethylsiloxans nun 62 g α-Hydroxy,ω-trimethylsilyl-polydimethylsiloxan und 662 g eines trimethylsilylendblockierten Polydimethylsiloxans verwendet wurden.

Die Ergebnisse finden sich in Tabelle 1.

### Beispiel 6

17 g eines α-Hydroxy, ω-trimethylsilyl-polydimethylsiloxans mit einer Viskosität von 100 mPa.s wurden in einem Labordissolver mit 26 g Ethyltriacetoxysilan und 13 g Methyltriacetoxysilan 5 Minuten vermischt, wobei durch die ablaufende Endcapping-Reaktion der Si-OH-Gruppen mit den Vernetzermolekülen Essigsäure freigesetzt wird (Vormischung). 1400 g eines α,ω-Dihydroxypolydimethylsiloxans mit einer Viskosität von 80 000 mPa.s, 707 g eines trimethylsilylendblockierten Polydimethylsiloxans (PDMS) mit einer Viskosität von 100 mPa.s, 50 g Ethyltriacetoxysilan und 20 g Methyltriacetoxysilan werden in einem Planetenmischer 5 Minuten vermischt. Anschließend wurde die oben hergestellte Vormischung eingearbeitet und dann 182 g pyrogene Kieselsäure mit einer spezifischen Oberfläche von 150 m²/g (käuflich erhältlich unter der Marke HDK® V15 bei der Wacker-Chemie GmbH, D-München) eingemischt. Nach 20-minütigem Homogenisieren im Vakuum wurden 0,24 g Dibutylzinndiacetat unter Vakuum eingemischt. Das hergestellte Produkt wurde in feuchtigkeitsdichte, handelsübliche PE-Kartuschen abgefüllt und des Weiteren wie in Beispiel 1 beschrieben verfahren.

Die Ergebnisse finden sich in Tabelle 1.

**Tabelle 1**

| **Beispiele** | **1** | **2** | **3** | **4** | **5** | **6** |
|---|---|---|---|---|---|---|
| **Auspressrate (g/min)** | 322 | 342 | 355 | 355 | 355 | 312 |
| **Härte (Shore-A)** | 17 | 15 | 15 | 13 | 12 | 17 |
| **Reißdehnung (%)** | 432 | 445 | 517 | 523 | 545 | 426 |
| **Modul (N/mm)** | 0,35 | 0,33 | 0,29 | 0,28 | 0,27 | 0,35 |

## Patentansprüche

1. Vernetzbare Massen auf der Basis von Organosiliciumverbindungen herstellbar unter Verwendung von Organosiliciumverbindungen aus Einheiten der Formel
(HO)ₐR_{b}SiO_{(4-a-b)/2} (I),
wobei
R gleich oder verschieden sein kann und einen einwertigen, gegebenenfalls substituierten Kohlenwasserstoffrest bedeutet, der durch Heteroatome unterbrochen sein kann,
a 0 oder 1 ist und
b 0, 1, 2 oder 3 ist,
mit der Maßgabe, dass die Organosiliciumverbindung eine Einheit der Formel (I) mit a=1 aufweist und bei 25°C eine Viskosität von 5 bis 1000 mPas hat, wobei Organosiliciumverbindungen aus Einheiten der Formel (I) in Mengen von 0,1 bis 15 Gewichtsteilen, bezogen auf 100 Gewichtsteile vernetzbarer Masse, enthalten sind.

2. Vernetzbare Massen gemäß Anspruch 1, **dadurch gekennzeichnet, dass** es sich bei den eingesetzten Organosiliciumverbindungen aus Einheiten der Formel (I) um im wesentlichen lineare Diorganosiloxane der Formel
OH(R₂SiO)ₙSiR₃ (II)
handelt, wobei R die oben genannte Bedeutung hat und der durchschnittliche Wert für n so gewählt ist, dass die Verbindung der Formel (II) eine Viskosität von 5 bis 1000 mPas besitzt, gemessen bei 25°C.

3. Vernetzbare Massen gemäß Anspruch 1 oder 2, **dadurch gekennzeichnet, dass** die eingesetzten Organosiliciumverbindungen aus Einheiten der Formel (I) eine Viskosität bei 25°C von 10 bis 500 mm²/s haben.

4. Vernetzbare Massen gemäß einem oder mehreren der Ansprüche 1 bis 3, **dadurch gekennzeichnet, dass** es sich um durch Kondensationsreaktion vernetzbare Massen handelt.

5. Vernetzbare Massen gemäß einem oder mehreren der Ansprüche 1 bis 4, **dadurch gekennzeichnet, dass** es sich um solche handelt, die herstellbar sind unter Verwendung von
(A) Organosiliciumverbindungen mit mindestens zwei Hydroxylgruppen oder mindestens zwei hydrolysierbaren Resten,
(B) Organosiliciumverbindungen aus Einheiten der Formel (I) und gegebenenfalls
(C) Vernetzer.

6. Vernetzbare Massen gemäß einem oder mehreren der Ansprüche 1 bis 5, **dadurch gekennzeichnet, dass** es sich um solche handelt, die herstellbar sind unter Verwendung von
(A) Organosiliciumverbindungen der Formel (III),
(B) Organosiliciumverbindungen aus Einheiten der Formel (I) gegebenenfalls
(C) Vernetzer,
gegebenenfalls
(D) Katalysator,
gegebenenfalls
(E) Weichmacher,
gegebenenfalls
(F) Füllstoffe,
gegebenenfalls
(G) Haftvermittler und
gegebenenfalls
(H) Additive.

7. Formkörper, hergestellt durch Vernetzung der Massen gemäß einem oder mehreren der Ansprüche 1 bis 6.

## Claims

1. Crosslinkable compositions based on organosilicon compounds which can be prepared using organosilicon compounds composed of units of the formula
(HO)ₐR_{b}SiO_{(4-a-b)/2} (I),
where
R may be identical or different and is a monovalent, if appropriate, substituted hydrocarbon radical which may have interruption via heteroatoms,
a is 0 or 1, and
b is 0, 1, 2 or 3,
with the proviso that the organosilicon compound has a unit of the formula (I) where a = 1, and has a viscosity of from 5 to 1000 mPas at 25°C, where the materials comprise amounts of from 0.1 to 15 parts by weight, based on 100 parts by weight of crosslinkable composition, of organosilicon compounds composed of units of the formula (I).

2. Crosslinkable compositions according to Claim 1, **characterized in that** the organosilicon compounds used composed of units of the formula (I) are substantially linear diorganosiloxanes of the formula
OH(R₂SiO)ₙSiR₃ (II),
where R is as defined above, and the average value for n has been selected in such a way that the compound of formula (II) has a viscosity of from 5 to 1000 mPas, measured at 25°C.

3. Crosslinkable compositions according to Claim 1 or 2, **characterized in that** the organosilicon compounds used composed of units of the formula (I) have a viscosity of from 10 to 500 mm²/s at 25°C.

4. Crosslinkable compositions according to one or more of Claims 1 to 3, **characterized in that** they are compositions crosslinkable via a condensation reaction.

5. Crosslinkable compositions according to one or more of Claims 1 to 4, **characterized in that** they can be prepared using
(A) organosilicon compounds having at least two hydroxy groups or having at least two hydrolyzable radicals,
(B) organosilicon compounds composed of units of the formula (I), and, if appropriate,
(C) crosslinking agent.

6. Crosslinkable compositions according to one or more of Claims 1 to 5, **characterized in that** they can be prepared using
(A) organosilicon compounds of the formula (III),
(B) organosilicon compounds composed of units of the formula (I), and
if appropriate
(C) crosslinking agent,
if appropriate
(D) catalyst,
if appropriate
(E) plasticizer,
if appropriate
(F) fillers,
if appropriate
(G) adhesion promoter, and
if appropriate
(H) additives.

7. Moldings produced via crosslinking of the compositions according to one or more of Claims 1 to 6.

## Revendications

1. Masses réticulables que l'on peut préparer à partir de composés d'organosilicium, en utilisant des composés d'organosilicium constitués d'unités de la formule
(HO)ₐR_{b}SiO_{(4-a-b)/2} (I),
dans laquelle les R peuvent être identiques ou différents et représentent des radicaux hydrocarbonés monovalents, le cas échéant substitués, et qui peuvent être interrompus par des hétéroatomes,
a vaut 0 ou 1 et
b vaut 0, 1, 2 ou 3,
à la condition que le composé d'organosilicium présente une unité de la formule (I) avec a = 1 et ait à 25°C une viscosité de 5 à 1000 mPas, les composés d'organosilicium à base d'unités de la formule (I) étant présents en des quantités de 0,1 à 15 parties en poids, par rapport à 100 parties en poids de masse réticulable.

2. Masses réticulables suivant la revendication 1, **caractérisées en ce que** les composés d'organosilicium mis en oeuvre et à base d'unités de la formule (I) sont essentiellement des diorganosiloxanes linéaires de la formule
OH(R₂SiO)ₙSiR₃ (II),
dans laquelle R a la signification indiquée ci-avant et la valeur moyenne de n est choisie de manière que le composé de la formule (II) possède une viscosité de 5 à 1000 mPas, mesurée à 25°C.

3. Masses réticulables suivant la revendication 1 ou 2, **caractérisées en ce que** les composés d'organosilicium mis en oeuvre et à base d'unités de la formule (I) ont une viscosité à 25°C de 10 à 500 mm²/s.

4. Masses réticulables suivant une ou plusieurs des revendications 1 à 3, **caractérisées en ce qu'**il s'agit de masses réticulables par une réaction de condensation.

5. Masses réticulables suivant une ou plusieurs des revendications 1 à 4, **caractérisées en ce qu'**il s'agit de masses que l'on peut préparer en utilisant
(A) des composés d'organosilicium comportant au moins deux groupes hydroxyle ou au moins deux radicaux hydrolysables,
(B) des composés d'organosilicium composés d'unités de la formule (I) et le cas échéant
(C) des réticulants.

6. Masses réticulables suivant une ou plusieurs des revendications 1 à 5, **caractérisées en ce qu'**il s'agit de masses que l'on peut préparer en utilisant
(A) des composés d'organosilicium de la formule (III),
(B) des composés d'organosilicium composés d'unités de la formule (I) et le cas échéant
(C) des réticulants, le cas échéant
(D) un catalyseur, le cas échéant
(E) des plastifiants, le cas échéant
(F) des charges, le cas échéant
(G) des agents adhérisants et le cas échéant
(H) des additifs.

7. Corps moulés préparés par réticulation des masses suivant une ou plusieurs de revendications 1 à 6.
